**Europäisches Patentamt**

**European Patent Office**

**Office européen des brevets**

(19)

(11) Veröffentlichungsnummer: **0 268 582**
**B1**

(12) # EUROPÄISCHE PATENTSCHRIFT

(45) Veröffentlichungstag der Patentschrift:
31.01.90

(51) Int. Cl.⁴: **F 16 H 3/08**

(21) Anmeldenummer: **86903369.6**

(22) Anmeldetag: **07.06.86**

(86) Internationale Anmeldenummer:
**PCT/EP 86/00343**

(87) Internationale Veröffentlichungsnummer:
**WO 87/00254 (15.01.87 Gazette 87/1)**

(54) GETRIEBE.

(30) Priorität: **06.07.85 PC /EP85/003 31**

(43) Veröffentlichungstag der Anmeldung:
**01.06.88 Patentblatt 88/22**

(45) Bekanntmachung des Hinweises auf die Patenterteilung:
**31.01.90 Patentblatt 90/5**

(84) Benannte Vertragsstaaten:
**AT DE FR GB IT**

(56) Entgegenhaltungen:
EP-A- 0 129 341
WO-A-85/01335
FR-A- 2 510 492
GB-A- 2 129 385

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **LEHLE, Hubert, Eschstrasse 11, D-7996 Meckenbeuren (DE)**

(74) Vertreter: **Raue, Reimund, Zahnradfabrik Friedrichshafen AG Löwentaler Strasse 100 Postfach 2520, D-7990 Friedrichshafen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein lastschaltbares Getriebe für Kraftfahrzeuge, besonders Ackerschlepper.

Ein Ackerschlepper soll in einem Hauptfahrgeschwindigkeitsbereich zwischen etwa 4 km/h und etwa 10 bis 12 km/h möglichst immer mit höchster Motordrehzahl und höchstem Motordrehmoment fahren können. Das Getriebe muss daher für diesen mittleren Hauptfahrgeschwindigkeitsbereich viele Gangstufen mit kleinem Stufensprung haben. Für einen darunter liegenden Kriechgeschwindigkeitsbereich und für einen darüber liegenden Transportgeschwindigkeitsbereich genügen dagegen wenige Gangstufen mit grossem Stufensprung.

Ein bekanntes lastschaltbares Getriebe für Akkerschlepper (DE-OS 32 28 353) besteht aus einem Hauptgetriebe mit vier Gangstufen, einem Bereichsgruppengetriebe mit zwei Bereichsstufen und aus einem Wendegetriebe und bildet damit acht Vorwärtsgänge und acht Rückwärtsgänge. Das reicht bei einem gleichmässigen Stufensprung von etwa 1,2, wie er heute für den Hauptfahrgeschwindigkeitsbereich gewünscht wird, nur für einen Gesamtfahrgeschwindigkeitsbereich von etwa 4 bis 14 km/h. Gewünscht wird heute jedoch ein Gesamtfahrgeschwindigkeitsbereich von etwa 1 bis 2 km/h bis etwa 30 bis 40 km/h. Dazu muss man den Stufensprung vergrössern auf etwa 1,35 — das ergibt einen Fahrgeschwindigkeitsbereich von etwa 4 bis 32 km/h — und ein Kriechgruppengetriebe hinzufügen. Dabei bleibt der Stufensprung zwischen den Gangstufen von der minimalen Kriechgeschwindigkeit bis zur maximalen Transportgeschwindigkeit immer gleich, d. h., er ist unzulänglich gross in der Mitte und unnötig klein an beiden Enden des Gesamtfahrgeschwindigkeitsbereiches. Ein anderes bekanntes lastschaltbares Getriebe für Ackerschlepper (WO 85/01335, Fig. 3) besteht aus einem Hauptgetriebe mit vier Gangstufen, einem Bereichsgruppengetriebe mit zwei Bereichsstufen, einem Wendegetriebe und zusätzlich aus einem Splitgruppengetriebe, mit dem die Gangstufen des Hauptgetriebes halbiert werden. Bei einem gleichmässigen Stufensprung von etwa 1,2, wie er heute für den Hauptfahrgeschwindigkeitsbereich gewünscht wird, wird erst durch dieses zusätzliche Splitgruppengetriebe ein Gesamtfahrgeschwindigkeitsbereich von etwa 2 km/h bis etwa 30 km/h erreicht, wie er heute gewünscht wird. Dabei bleibt der Stufensprung zwischen den Gangstufen von der minimalen Kriechgeschwindigkeit bis zur maximalen Transportgeschwindigkeit immer gleich, d. h., er ist richtig für den mittleren Hauptfahrgeschwindigkeitsbereich zwischen etwa 4 km/h und etwa 10 bis 12 km/h, jedoch unnötig klein im Kriechgeschwindigkeitsbereich und im Transportgeschwindigkeitsbereich.

Der Erfindung liegt die Aufgabe zugrunde, ein lastschaltbares Getriebe für Kraftfahrzeuge, besonders Ackerschlepper, zu schaffen, mit dem ein Gesamtfahrgeschwindigkeitsbereich zwischen etwa 1 bis 2 km/h und etwa 30 bis 50 km/h erreicht wird, mit einem Stufensprung von etwa 1,2 in einem mittleren Hauptfahrgeschwindigkeitsbereich zwischen etwa 4 km/h und etwa 10 bis 12 km/h, mit einem Stufensprung von etwa 1,4 bis 1,5 in einem Kriechgeschwindigkeitsbereich und in einem Transportgeschwindigkeitsbereich, und mit möglichst wenigen Gangstufen, Zahnrädern, Klauenkupplungen und nur zwei lastschaltbaren Reibkupplungen.

Diese Aufgabe wird mit den Merkmalen des Anspruches 1 der Erfindung gelöst:

Ein erster Teil des Hauptgetriebes bildet eine erste Reihe von Gangstufen mit einem grossen Stufensprung. Diese erste Reihe wird mit zwei Bereichsstufen des Bereichsgruppengetriebes genutzt für einen Kriechgeschwindigkeitsbereich und für einen Transportgeschwindigkeitsbereich. Ein zweiter Teil des Hauptgetriebes bildet eine zweite Reihe von Gangstufen mit einem kleinen Stufensprung. Diese zweite Reihe wird genutzt für einen mittleren Hauptfahrgeschwindigkeitsbereich. Dazu dient eine Klauenkupplung, die eine Abtriebswelle des Getriebes unmittelbar mit einer zweiten Abtriebswelle des Hauptgetriebes verbindet. Diese Klauenkupplung bildet damit eine mittlere Bereichsstufe für das Bereichsgruppengetriebe mit einem besonders guten Leistungswirkungsgrad, weil in dieser mittleren Bereichsstufe die Leistung immer nur über einen einzigen Radsatz fliesst.

Mit den Merkmalen der Unteransprüche wird der Gegenstand der Erfindung vorteilhaft weitergebildet.

Ein Getriebe nach Anspruch 6 mit zwölf Vorwärts-Gangstufen und zwölf Rückwärts-Gangstufen hat nur sechs Doppel-Klauenkupplungen und nur vierundzwanzig Zahnräder in elf Radsätzen.

Ein Getriebe nach Anspruch 7 mit zwölf Vorwärts-Gangstufen und zwölf Rückwärts-Gangstufen hat nur sechs Doppel-Klauenkupplungen und nur zwanzig Zahnräder in sieben Radsätzen.

Ein Getriebe nach Anspruch 8 mit achtzehn Vorwärts-Gangstufen und achtzehn Rückwärts-Gangstufen hat nur acht Doppel-Klauenkupplungen und nur sechsundzwanzig Zahnräder in neun Radsätzen.

Die Zeichnung zeigt Ausführungsbeispiele von Getrieben nach der Erfindung als vereinfachtes Räderschema. Es zeigen

Fig. 1 ein Getriebe nach Anspruch 6
Fig. 2 ein Getriebe nach Anspruch 7
Fig. 3 ein Getriebe nach Anspruch 8

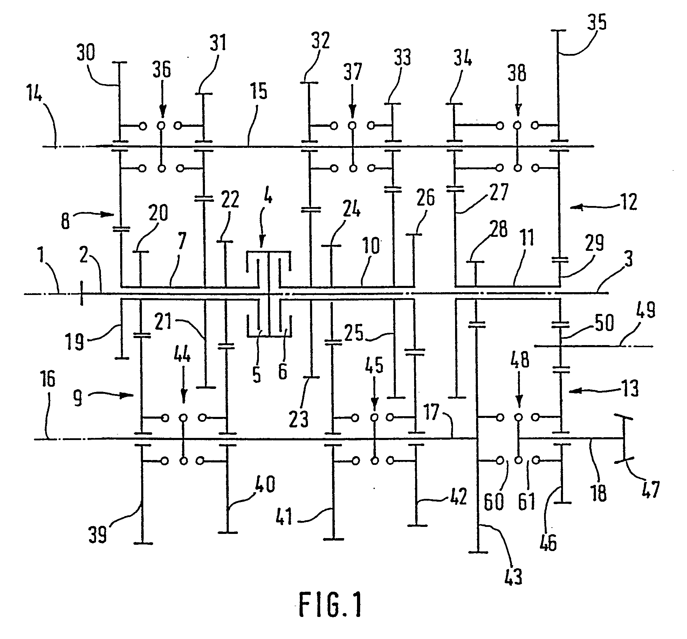

Bei einem ersten Getriebe (Fig. 1) sind in einer Hauptachse 1 eine Abtriebswelle 2, eine Doppel-Reibkupplung 4 mit einer ersten Reibkupplung 5 und einer zweiten Reibkupplung 6, eine erste Zwischenwelle 7 eines ersten Teils 8 eines Hauptgetriebes 8, 9, eine zweite Zwischenwelle 10 eines zweiten Teils 9 des Hauptgetriebes 8, 9 und eine dritte Zwischenwelle 11 angeordnet, die sowohl zu einem Bereichsgruppengetriebe 12 als auch zu einem Wendegetriebe 13 gehört. Die drei Zwischenwellen 7, 10, 11 sind als Hohlwellen ausgebildet. Die Antriebswelle 2 geht durch die drei hohlen Zwischenwellen 7, 10, 11 hindurch bis zur Abtriebsseite des Getriebes und bildet dort eine Motor-Zapfwelle 3.

In einer ersten Nebenachse 14 ist eine erste Nebenwelle 15 angeordnet.

In einer zweiten Nebenachse 16 sind eine zweite Nebenwelle 17 und eine Abtriebswelle 18 angeordnet.

Die erste Zwischenwelle 7 trägt vier Festräder 19, 20, 21, 22 als treibende Zahnräder 19, 20, 21, 22. Die zweite Zwischenwelle 10 trägt vier Festräder 23, 24, 25, 26 als treibende Zahnräder 23, 24, 25, 26. Die dritte Zwischenwelle 11 trägt drei Festräder 27, 28, 29 als treibende oder getriebene Zahnräder 27, 28, 29.

Die erste Nebenwelle 15 trägt sechs Losräder 30, 31, 32, 33, 34, 35 als getriebene Zahnräder 30, 31, 32, 33, 34, 35 und drei synchronisierte Doppel-Klauenkupplungen 36, 37, 38. Die zweite Nebenwelle 17 trägt vier Losräder 39, 40, 41, 42 als getriebene Zahnräder 39, 40, 41, 42, ein Festrad 43 als treibendes oder getriebenes Zahnrad 43 und zwei Doppel-Klauenkupplungen 44, 45. Die Abtriebswelle 18 trägt ein Losrad 46 als getriebenes Zahnrad 46, ein Kegelritzel 47 als treibendes Zahnrad 47 und eine Doppel-Klauenkupplung 48.

In einer dritten Nebenachse 49 ist ein Umkehr-Zahnrad 50 angeordnet. Das Umkehr-Zahnrad 50 kämmt mit dem Festrad 29 und dem Losrad 46. Weiterhin kämmen miteinander:
- Festrad 19 und Losrad 30
- Festrad 20 und Losrad 39
- Festrad 21 und Losrad 31
- Festrad 22 und Losrad 40
- Festrad 23 und Losrad 32
- Festrad 24 und Losrad 41
- Festrad 25 und Losrad 33
- Festrad 26 und Losrad 42
- Losrad 34 und Festrad 27
- Festrad 43 und Festrad 28
- Losrad 35 und Festrad 29

Die Festräder 19, 21, 23, 25 und die Losräder 30, 31, 32, 33 bilden einen ersten Teil 8 des Hauptgetriebes 8, 9 mit vier Gangstufen mit grossen Stufensprüngen.

Die Festräder 20, 22, 24, 26 und die Lösrader 39, 40, 41, 42 bilden einen zweiten Teil 9 des Hauptgetriebes 8, 9 mit vier Gangstufen mit kleinen Stufensprüngen.

Die Losräder 34, 35 und die Festräder 27, 29 bilden ein Bereichsgruppengetriebe 12.

Die Festräder 28, 29, 43, das Umkehr-Zahnrad 50 und das Losrad 46 bilden ein Wendegetriebe 13.

Die Festräder und Losräder haben folgende Zähnezahlen:
- Festrad 19    fünfunddreissig
- Festrad 20    zwanzig
- Festrad 21    achtundvierzig
- Festrad 22    sechsundzwanzig
- Festrad 23    einundvierzig
- Festrad 24    dreiundzwanzig
- Festrad 25    einundfünfzig
- Festrad 26    neunundzwanzig
- Festrad 27    fünfzig

- Festrad 28    sechzehn
- Festrad 29    sechzehn
- Losrad 30    vierzig
- Losrad 31    sechsundzwanzig
- Losrad 32    zweiunddreissig
- Losrad 33    zweiundzwanzig
- Losrad 34    fünfundzwanzig
- Losrad 35    neunundfünfzig
- Losrad 39    vierundfünfzig
- Losrad 40    neunundvierzig
- Losrad 41    zweiundfünfzig
- Losrad 42    fünfundvierzig
- Festrad 43    neunundfünfzig
- Losrad 46    einundfünfzig

Die Doppel-Reibkupplung 4 hat drei Schaltstellungen:
- sie verbindet die Antriebswelle 2 über eine ihrer Reibkupplungen 5 oder 6 mit einer der beiden zugehörigen Zwischenwellen 7 oder 10, oder
- sie trennt die Antriebswelle 2 vollständig vom Rest des Getriebes.

In ähnlicher Weise hat jede Doppel-Klauenkupplung 36, 37, 38, 44, 45, 48 drei Schaltstellungen:
- sie verbindet ihre Nebenwelle 15 oder 17 oder ihre Abtriebswelle 18 mit einem der beiden zugehörigen Zahnräder, oder
- sie trennt ihre Nebenwelle 15 oder 17 oder ihre Abtriebswelle 18 vollständig von beiden zugehörigen Zahnrädern.

Die Antriebswelle 2 ist mit einem nicht dargestellten Motor, insbesondere einem Verbrennungsmotor verbunden. Die Abtriebswelle 18 ist mit einer nicht dargestellten Antriebsachse eines nicht dargestellten Fahrzeuges, insbesondere eines Ackerschleppers verbunden.

Im ersten Gang fliesst die Leistung von der Antriebswelle 2 über die Reibkupplung 5, die Zwischenwelle 7, das Festrad 19, das Losrad 30, die Kupplung 36, die Nebenwelle 15, die Kupplung 38, das Losrad 34, das Festrad 27, die Zwischenwelle 11, das Festrad 28, das Festrad 43 und die Kupplung 48 zur Abtriebswelle 18.

Im zweiten Gang fliesst die Leistung von der Antriebswelle 2 über die Reibkupplung 6, die Zwischenwelle 10, das Festrad 23, das Losrad 32, die Kupplung 37, die Nebenwelle 15, die Kupplung 38 und von da aus weiter, wie im ersten Gang, zur Abtriebswelle 18.

Im dritten Gang fliesst die Leistung von der Antriebswelle 2 über die Reibkupplung 5, die Zwischenwelle 7, das Festrad 21, das Losrad 31, die Kupplung 36, die Nebenwelle 15, die Kupplung 38 und von da aus weiter, wie im ersten Gang, zur Abtriebswelle 18.

Im vierten Gang fliesst die Leistung von der Antriebswelle 2 über die Reibkupplung 6, die Zwischenwelle 10, das Festrad 25, das Losrad 33, die Kupplung 37, die Nebenwelle 15, die Kupplung 38 und von da aus weiter, wie im ersten Gang, zur Abtriebswelle 18.

Im fünften Gang fliesst die Leistung von der Antriebswelle 2 über die Reibkupplung 5, die Zwischenwelle 7, das Festrad 20, das Losrad 39, die Kupplung 44, die Nebenwelle 17 und die Kupplung 48 zur Abtriebswelle 18.

Im sechsten Gang fliesst die Leistung von der Antriebswelle 2 über die Reibkupplung 6, die Zwischenwelle 10, das Festrad 24, das Losrad 41, die Kupplung 45, die Nebenwelle 17 und die Kupplung 48 zur Abtriebswelle 18.

Im siebten Gang fliesst die Leistung von der Antriebswelle 2 über die Reibkupplung 5, die Zwischenwelle 7, das Festrad 22, das Losrad 40, die Kupplung 44, die Nebenwelle 17 und die Kupplung 48 zur Abtriebswelle 18.

Im achten Gang fliesst die Leistung von der Antriebswelle 2 über die Reibkupplung 6, die Zwischenwelle 10, das Festrad 26, das Losrad 42, die Kupplung 45, die Nebenwelle 17 und die Kupplung 48 zur Abtriebswelle 18.

Im neunten Gang fliesst die Leistung von der Antriebswelle 2 über die Reibkupplung 5, die Zwischenwelle 7, das Festrad 19, das Losrad 30, die Kupplung 36, die Nebenwelle 15, die Kupplung 38, das Losrad 35, das Festrad 29, die Hohlwelle 11, das Festrad 28, das Festrad 43 und die Kupplung 48 zur Abtriebswelle 18.

Im zehnten Gang fliesst die Leistung von der Antriebswelle 2 über die Reibkupplung 6, die Zwischenwelle 10, das Festrad 23, das Losrad 32, die Kupplung 37, die Nebenwelle 15, die Kupplung 38 und von da aus weiter, wie im neunten Gang, zur Abtriebswelle 18.

Im elften Gang fliesst die Leistung von der Antriebswelle 2 über die Reibkupplung 5, die Zwischenwelle 7, das Festrad 21, das Losrad 31, die Kupplung 36, die Nebenwelle 15, die Kupplung 38 und von da aus weiter, wie im neunten Gang, zur Abtriebswelle 18.

Im zwölften Gang fliesst die Leistung von der Antriebswelle 2 über die Reibkupplung 6, die Zwischenwelle 10, das Festrad 25, das Losrad 33, die Kupplung 37, die Nebenwelle 15, die Kupplung 38 und von da aus weiter, wie im neunten Gang, zur Abtriebswelle 18.

Im ersten Rückwärtsgang fliesst die Leistung von der Antriebswelle 2, wie im ersten Gang, zur Zwischenwelle 11 und von da aus weiter über das Festrad 29, das Umkehr-Zahnrad 50, das Losrad 46 und die Kupplung 48 zur Abtriebswelle 18.

Im zweiten Rückwärtsgang fliesst die Leistung von der Antriebswelle 2, wie im zweiten Gang, zur Zwischenwelle 11 und von da aus weiter, wie im ersten Rückwärtsgang, zur Abtriebswelle 18.

Im dritten Rückwärtsgang fliesst die Leistung von der Antriebswelle 2, wie im dritten Gang, zur Zwischenwelle 11 und von da aus weiter, wie im ersten Rückwärtsgang, zur Abtriebswelle 18.

Im vierten Rückwärtsgang fliesst die Leistung von der Antriebswelle 2, wie im vierten Gang, zur Zwischenwelle 11 und von da aus weiter, wie im ersten Rückwärtsgang, zur Abtriebswelle 18.

Im fünften Rückwärtsgang fliesst die Leistung von der Antriebswelle 2, wie im fünften Gang, zur Nebenwelle 17, von da aus weiter über das Festrad 43 und das Festrad 28 zur Zwischenwelle 11 und von da aus weiter, wie im ersten Rückwärtsgang, zur Abtriebswelle 18.

Im sechsten Rückwärtsgang fliesst die Leistung von der Antriebswelle 2, wie im sechsten Gang, zur Nebenwelle 17 und von da aus weiter, wie im fünften Rückwärtsgang, zur Abtriebswelle 18.

Im siebten Rückwärtsgang fliesst die Leistung von der Antriebswelle 2, wie im siebten Gang, zur Nebenwelle 17 und von da aus weiter, wie im fünften Rückwärtsgang, zur Abtriebswelle 18.

Im achten Rückwärtsgang fliesst die Leistung von der Antriebswelle 2, wie im achten Gang, zur Nebenwelle 17 und von da aus weiter, wie im fünften Rückwärtsgang, zur Abtriebswelle 18.

Im neunten Rückwärtsgang fliesst die Leistung von der Antriebswelle 2, wie im neunten Gang, zur Zwischenwelle 11 und von da aus weiter, wie im ersten Rückwärtsgang, zur Abtriebswelle 18.

Im zehnten Rückwärtsgang fliesst die Leistung von der Antriebswelle 2, wie im zehnten Gang, zur Zwischenwelle 11 und von da aus weiter, wie im ersten Rückwärtsgang, zur Abtriebswelle 18.

Im elften Rückwärtsgang fliesst die Leistung von der Antriebswelle 2, wie im elften Gang, zur Zwischenwelle 11 und von da aus weiter, wie im ersten Rückwärtsgang, zur Abtriebswelle 18.

Im zwölften Rückwärtsgang fliesst die Leistung von der Antriebswelle 2, wie im zwölften Gang, zur Zwischenwelle 11 und von da aus weiter, wie im ersten Rückwärtsgang, zur Abtriebswelle 18.

Mit den genannten Zähnezahlen dreht sich — bei gleicher Drehzahl der Antriebswelle 2 — die Abtriebswelle 18 im zwölften Gang/Rückwärtsgang zwanzigmal so schnell wie im ersten Gang/Rückwärtsgang. Anders gesagt: der Gesamt-Getriebesprung beträgt zwanzig. Die Stufensprünge von einem Gang zum anderen Gang betragen:

- erster/zweiter      Gang 1,45
- zweiter/dritter     Gang 1,45
- dritter/vierter     Gang 1,25
- vierter/fünfter     Gang 1,20
- fünfter/sechster    Gang 1,20
- sechster/siebter    Gang 1,20
- siebter/achter      Gang 1,20
- achter/neunter      Gang 1,38
- neunter/zehnter     Gang 1,45
- zehnter/elfter      Gang 1,45
- elfter/zwölfter     Gang 1,25

Ein Fahrzeug mit einem solchen Getriebe kann beispielsweise folgende Fahrgeschwindigkeiten erreichen:

- im ersten     Gang  1,9 km/h
- im zweiten    Gang  2,8 km/h
- im dritten    Gang  4,0 km/h
- im vierten    Gang  5,1 km/h
- im fünften    Gang  6,1 km/h
- im sechsten   Gang  7,3 km/h
- im siebten    Gang  8,7 km/h
- im achten     Gang 10,5 km/h
- im neunten    Gang 14,5 km/h
- im zehnten    Gang 21,0 km/h
- im elften     Gang 30,4 km/h
- im zwölften   Gang 38,0 km/h

Zum Anfahren aus dem Stillstand — Motor läuft, Antriebswelle 2 läuft, Abtriebswelle 18 steht still, Fahrzeug steht still — werden nacheinander geschlossen zuerst die notwendigen Klauenkupplungen und zuletzt eine der beiden Reibkupplungen, beispielsweise zum Anfahren im ersten Gang:

— zuerst die Kupplung 48 zwischen der Abtriebswelle 18 und der zweiten Nebenwelle 17,

— dann die Kupplung 38 zwischen dem Losrad 34 und der ersten Nebenwelle 15,

— dann die Kupplung 36 zwischen der ersten Nebenwelle 15 und dem Losrad 30, und

— zuletzt die Reibkupplung 5 zwischen der ersten Zwischenwelle 7 und der Antriebswelle 2.

Zum Gangwechsel von einem Gang („alten" Gang) zu einem benachbarten Gang („neuen" Gang) — Antriebswelle 2 läuft, Abtriebswelle 18 läuft — werden zuerst die für den „neuen" Gang notwendigen Klauenkupplungen geschlossen, dann die für den „alten" Gang notwendige Reibkupplung geöffnet und zuletzt die für den „neuen" Gang notwendige Reibkupplung geschlossen, beispielsweise zum Gangwechsel vom achten Gang zum neunten Gang werden:

— zuerst die Kupplung 38 zwischen dem Losrad 35 und der Nebenwelle 15 geschlossen,

— dann die Kupplung 36 zwischen der Nebenwelle 15 und dem Losrad 30 geschlossen,

— dann die Reibkupplung 6 zwischen der Zwischenwelle 10 und der Antriebswelle 2 geöffnet, und

— zuletzt die Reibkupplung 5 zwischen der Antriebswelle 2 und der Zwischenwelle 7 geschlossen.

Die für den „alten" Gang notwendigen Klauenkupplungen — im genannten Beispiel die Kupplung 45 zwischen dem Losrad 42 und der Nebenwelle 17 und die Kupplung 48 zwischen der Nebenwelle 17 und der Abtriebswelle 18 — müssen nicht geöffnet werden, sondern können geschlossen bleiben. Der Gangwechsel erfolgt erst durch das Öffnen und Schliessen der beiden Reibkupplungen 5 und 6 der Doppel-Reibkupplung 4. Bei geeigneter Steuerung der beiden Reibkupplungen 5 und 6 kann auch während des Gangwechsels Leistung von der Antriebswelle 2 zur Abtriebswelle 18 übertragen werden.

Wird zwischen zwei Gängen immer nur hin- und hergeschaltet, müssen für den Gangwechsel nur die beiden Reibkupplungen 5 und 6 betätigt werden.

Die Doppel-Reibkupplung 4 mit den beiden Reibkupplungen 5, 6 und alle Doppel-Klauenkupplungen 36, 37, 38, 44, 45, 48 werden elektrohydraulisch betätigt durch nicht dargestellte Schaltzylinder. Die Schaltzylinder werden gesteuert und geregelt durch eine nicht dargestellte elektronische Schaltlogik. Schaltbefehle zur Durchführung der Gangwechsel können wahlweise von Hand oder durch eine nicht dargestellte Erweiterung der elektronischen Schaltlogik gegeben werden. Die Erweiterung der elektronischen Schaltlogik erhält Signale von nicht dargestellten Sensoren für die Drehzahl und das Drehmoment der Antriebswelle 2, die Schaltstellungen der Doppel-Reibkupplung 4 und der Doppel-Klauenschaltkupplungen 36, 37, 38, 44, 45, 48 und die Drehzahl der Abtriebswelle 18 und bildet daraus Schaltbefehle zur Durchführung der Gangwechsel.

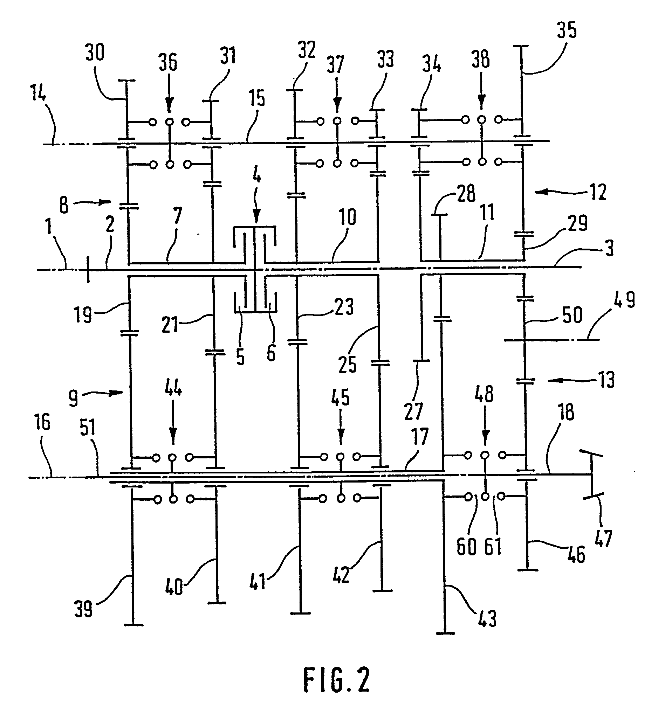

Ein zweites Getriebe (Fig. 2) unterscheidet sich von dem ersten Getriebe (Fig. 1) durch folgende Merkmale:

— die erste Zwischenwelle 7 trägt nur zwei Festräder 19, 21,

— die zweite Zwischenwelle 10 trägt nur zwei Festräder 23, 25,

— das Festrad 19 kämmt mit dem Losrad 30 *und* mit dem Losrad 39,

— das Festrad 21 kämmt mit dem Losrad 31 *und* mit dem Losrad 40,

— das Festrad 23 kämmt mit dem Losrad 32 *und* mit dem Losrad 41,

— das Festrad 25 kämmt mit dem Losrad 33 *und* mit dem Losrad 42,

— die zweite Nebenwelle 17 bildet eine vierte Hohlwelle,

— die Abtriebswelle 18 geht durch die hohle Nebenwelle 17 hindurch bis zur Antriebsseite des Getriebes und bildet dort eine Weg-Zapfwelle 51,

— die Festräder und Losräder haben folgende Zähnezahlen:

— Festrad 19    dreissig
— Festrad 21    vierzig
— Festrad 23    fünfunddreissig
— Festrad 25    fünfundvierzig
— Festrad 27    sechsundvierzig
— Festrad 28    siebenundzwanzig
— Festrad 29    sechzehn
— Losrad 30    einunddreissig
— Losrad 31    einundzwanzig
— Losrad 32    sechsundzwanzig
— Losrad 33    sechzehn
— Losrad 34    fünfzehn
— Losrad 35    fünfundvierzig
— Losrad 39    dreiundsiebzig
— Losrad 40    dreiundsechzig
— Losrad 41    achtundsechzig
— Losrad 42    achtundfünfzig
— Festrad 43    sechsundsiebzig
— Losrad 46    fünfundvierzig

— im fünften Gang/Rückwärtsgang fliesst die Leistung von der Antriebswelle 2 über die Reibkupplung 5, die Zwischenwelle 7 und das Festrad 19 zum Losrad 39 und von da aus weiter, wie im fünften Gang/Rückwärtsgang des ersten Getriebes (Fig. 1), zur Abtriebswelle 18,

— im sechsten Gang/Rückwärtsgang fliesst die Leistung von der Antriebswelle 2 über die Reibkupplung 6, die Zwischenwelle 10 und das Festrad 23 zum Losrad 41 und von da aus weiter, wie im sechsten Gang/Rückwärtsgang des ersten Getriebes (Fig. 1), zur Abtriebswelle 18,

— im siebten Gang/Rückwärtsgang fliesst die Leistung von der Antriebswelle 2 über die Reibkupplung 5, die Zwischenwelle 7 und das Festrad 21 zum Losrad 40 und von da aus weiter, wie im siebten Gang/Rückwärtsgang des ersten Getriebes (Fig. 1), zur Abtriebswelle 18,

— im achten Gang/Rückwärtsgang fliesst die Leistung von der Antriebswelle 2 über die Reibkupplung 6, die Zwischenwelle 10 und das Festrad 25 zum Losrad 42 und von da aus weiter, wie im achten Gang/Rückwärtsgang des ersten Getriebes (Fig. 1), zur Abtriebswelle 18.

Mit den genannten Zähnezahlen dreht sich — bei gleicher Drehzahl der Antriebswelle 2 — die Abtriebswelle 18 im zwölften Gang/Rückwärtsgang 25mal so schnell wie im ersten Gang/Rückwärtsgang. Anders gesagt: der Gesamt-Getriebesprung beträgt fünfundzwanzig. Die Stufensprünge von Gang zu Gang betragen:

— erster/zweiter     Gang 1,39
— zweiter/dritter     Gang 1,41
— dritter/vierter     Gang 1,47
— vierter/fünfter     Gang 1,26
— fünfter/sechster     Gang 1,25
— sechster/siebter     Gang 1,23
— siebter/achter     Gang 1,22
— achter/neunter     Gang 1,25
— neunter/zehnter     Gang 1,39
— zehnter/elfter     Gang 1,41
— elfter/zwölfter     Gang 1,47

Ein Fahrzeug mit einem solchen Getriebe kann beispielsweise folgende Fahrgeschwindigkeiten erreichen:

— im ersten     Gang   1,35 km/h
— im zweiten     Gang   1,90 km/h
— im dritten     Gang   2,65 km/h
— im vierten     Gang   3,90 km/h
— im fünften     Gang   4,90 km/H
— im sechsten     Gang   6,20 km/h
— im siebten     Gang   7,60 km/h
— im achten     Gang   9,30 km/h
— im neunten     Gang 11,60 km/h
— im zehnten     Gang 16,20 km/h
— im elften     Gang 22,80 km/h
— im zwölften     Gang 33,70 km/h

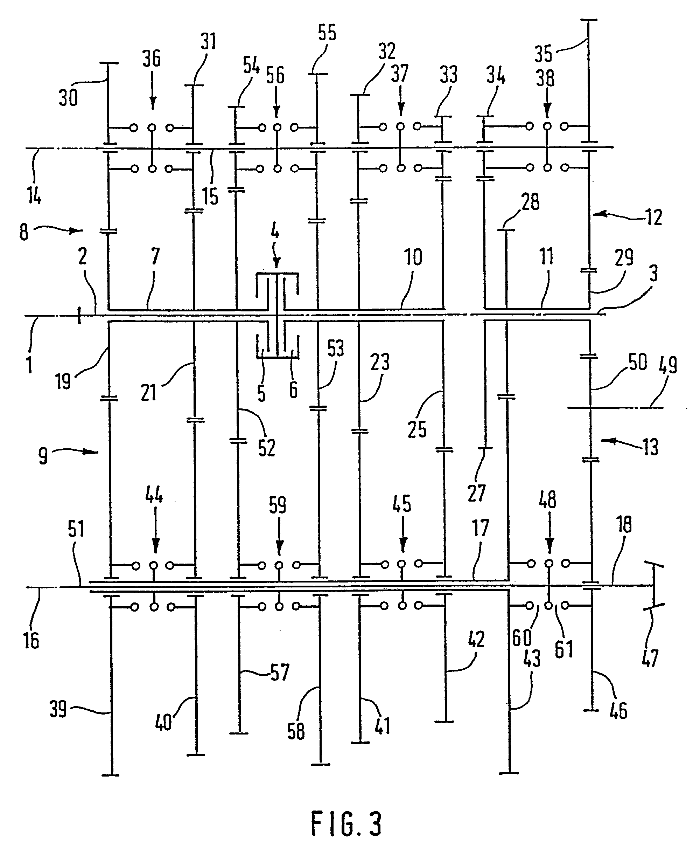

Ein drittes Getriebe (Fig. 3) unterscheidet sich von dem zweiten Getriebe (Fig. 2) durch folgende Merkmale:

— die erste Zwischenwelle 7 trägt drei Festräder 19, 21, 52,
— die zweite Zwischenwelle 10 trägt drei Festräder 53, 23, 25,
— auf der ersten Nebenwelle 15 sind zusätzlich angeordnet zwei Losräder 54, 55 und eine Doppel-Klauenkupplung 56,
— auf der zweiten Nebenwelle 17 sind zusätzlich angeordnet zwei Losräder 57, 58 und eine Doppel-Klauenkupplung 59,
— das Festrad 52 kämmt mit dem Losrad 54 *und* mit dem Losrad 57,
— das Festrad 53 kämmt mit dem Losrad 55 *und* mit dem Losrad 58,
— die Festräder und Losräder haben folgende Zähnezahlen:

— Festrad 19     siebenunddreissig
— Festrad 21     siebenundvierzig
— Festrad 52     siebenundfünfzig
— Festrad 53     zweiundvierzig
— Festrad 23     zweiundfünfzig
— Festrad 25     zweiundsechzig
— Festrad 27     zweiundsechzig
— Festrad 28     zweiunddreissig
— Festrad 29     sechzehn
— Losrad 30     zweiundvierzig
— Losrad 31     zweiunddreissig
— Losrad 54     zweiundzwanzig
— Losrad 55     siebenunddreissig
— Losrad 32     siebenundzwanzig
— Losrad 33     siebzehn
— Losrad 34     siebzehn
— Losrad 35     dreiundsechzig
— Losrad 39     zweiundachtzig
— Losrad 40     zweiundsiebzig
— Losrad 57     zweiundsechzig
— Losrad 58     siebenundsiebzig
— Losrad 41     siebenundsechzig
— Losrad 42     siebenundfünfzig
— Festrad 43     siebenundachtzig
— Losrad 46     dreiundvierzig

— im ersten Gang fliesst die Leistung von der Antriebswelle 2 zur Abtriebswelle 18 wie im ersten Gang des ersten Getriebes (Fig. 1) und des zweiten Getriebes (Fig. 2),
— im zweiten Gang fliesst die Leistung von der Antriebswelle 2 über die Reibkupplung 6, die Zwischenwelle 10, das Festrad 53, das Losrad 55 und die Kupplung 56 zur Nebenwelle 15 und von da aus weiter, wie im zweiten Gang des ersten Getriebes (Fig. 1) und des zweiten Getriebes (Fig. 2), zur Abtriebswelle 18,
— im dritten Gang fliesst die Leistung von der Antriebswelle 2 zur Abtriebswelle 18 wie im dritten Gang des ersten Getriebes (Fig. 1) und des zweiten Getriebes (Fig. 2),
— im vierten Gang fliesst die Leistung von der Antriebswelle 2 zur Abtriebswelle 18 wie im zweiten Gang des ersten Getriebes (Fig. 1) und des zweiten Getriebes (Fig. 2),
— im fünften Gang fliesst die Leistung von der Antriebswelle 2 über die Reibkupplung 5, die Zwischenwelle 7, das Festrad 52, das Losrad 54 und die Kupplung 56 zur Nebenwelle 15 und von da aus weiter, wie im ersten Gang des ersten Getriebes (Fig. 1) und des zweiten Getriebes (Fig. 2), zur Abtriebswelle 18,
— im sechsten Gang fliesst die Leistung von der Antriebswelle 2 zur Abtriebswelle 18 wie im vierten Gang des ersten Getriebes (Fig. 1) und des zweiten Getriebes (Fig. 2),
— im siebten Gang fliesst die Leistung von der Antriebswelle 2 zur Abtriebswelle 18 wie im fünften Gang des zweiten Getriebes (Fig. 2),
— im achten Gang fliesst die Leistung von der Antriebswelle 2 über die Reibkupplung 6, die Zwischenwelle 10, das Festrad 53, das Losrad 58 und die Kupplung 59 zur Nebenwelle 17 und von da aus weiter, wie im fünften Gang des ersten Getriebes (Fig. 1) und des zweiten Getriebes (Fig. 2), zur Abtriebswelle 18,
— im neunten Gang fliesst die Leistung von der Antriebswelle 2 zur Abtriebswelle 18 wie im siebten Gang des zweiten Getriebes (Fig. 2),
— im zehnten Gang fliesst die Leistung von der Antriebswelle 2 zur Abtriebswelle 18 wie im sechsten Gang des zweiten Getriebes (Fig. 2),
— im elften Gang fliesst die Leistung von der Antriebswelle 2 über die Reibkupplung 5, die Zwischenwelle 7, das Festrad 52, das Losrad 57 und die Kupplung 59 zur Nebenwelle 17 und von da aus weiter, wie im fünften Gang des zweiten Getriebes (Fig. 2), zur Abtriebswelle 18,

— im zwölften Gang fliesst die Leistung von der Antriebswelle 2 zur Abtriebswelle 18 wie im achten Gang des zweiten Getriebes (Fig. 2),

— im dreizehnten Gang fliesst die Leistung von der Antriebswelle 2 zur Abtriebswelle 18 wie im neunten Gang des ersten Getriebes (Fig. 1) und des zweiten Getriebes (Fig. 2) zur Abtriebswelle 18,

— im vierzehnten Gang fliesst die Leistung von der Antriebswelle 2 über die Reibkupplung 6, die Zwischenwelle 10, das Festrad 53, das Losrad 55 und die Kupplung 56 zur Nebenwelle 15 und von da aus weiter, wie im neunten Gang des ersten Getriebes (Fig. 1) und des zweiten Getriebes (Fig. 2), zur Abtriebswelle 18,

— im fünfzehnten Gang fliesst die Leistung von der Antriebswelle 2 zur Abtriebswelle 18 wie im elften Gang des ersten Getriebes (Fig. 1) und des zweiten Getriebes (Fig. 2) zur Abtriebswelle 18,

— im sechzehnten Gang fliesst die Leistung von der Antriebswelle 2 zur Abtriebswelle 18 wie im zehnten Gang des ersten Getriebes (Fig. 1) und des zweiten Getriebes (Fig. 2),

— im siebzehnten Gang fliesst die Leistung von der Antriebswelle 2 über die Reibkupplung 5, die Zwischenwelle 7, das Festrad 52, das Losrad 54 und die Kupplung 56 zur Nebenwelle 15 und von da aus weiter, wie im neunten Gang des ersten Getriebes (Fig. 1) und des zweiten Getriebes (Fig. 2), zur Abtriebswelle 18,

— im achtzehnten Gang fliesst die Leistung von der Antriebswelle 2 zur Abtriebswelle 18 wie im zwölften Gang des ersten Getriebes (Fig. 1) und des zweiten Getriebes (Fig. 2),

— in achtzehn Rückwärtsgängen — vom ersten Rückwärtsgang bis zum achtzehnten Rückwärtsgang — fliesst die Leistung von der Antriebswelle 2 wie in den entsprechenden Vorwärtsgängen — vom ersten Gang bis zum achtzehnten Gang — zur Zwischenwelle 11 und von da aus weiter, wie im ersten Rückwärtsgang des ersten Getriebes (Fig. 1) und des zweiten Getriebes (Fig. 2), über das Festrad 29, das Umkehr-Zahnrad 50, das Losrad 46 und die Kupplung 48 zur Abtriebswelle 18.

Mit den genannten Zähnezahlen dreht sich — bei gleicher Drehzahl der Antriebswelle 2 — die Abtriebswelle 18 im achtzehnten Gang/Rückwärtsgang etwa 60mal so schnell wie im ersten Gang/Rückwärtsgang. Anders gesagt: der Gesamt-Getriebesprung beträgt etwa 60. Die Stufensprünge von Gang zu Gang betragen:

| — erster/zweiter | Gang 1,29 |
| — zweiter/dritter | Gang 1,295 |
| — dritter/vierter | Gang 1,31 |
| — vierter/fünfter | Gang 1,35 |
| — fünfter/sechster | Gang 1,405 |
| — sechster/siebter | Gang 1,225 |
| — siebter/achter | Gang 1,21 |
| — achter/neunter | Gang 1,20 |
| — neunter/zehnter | Gang 1,19 |
| — zehnter/elfter | Gang 1,185 |
| — elfter/zwölfter | Gang 1,185 |
| — zwölfter/dreizehnter | Gang 1,185 |
| — dreizehnter/vierzehnter | Gang 1,29 |
| — vierzehnter/fünfzehnter | Gang 1,295 |
| — fünfzehnter/sechzehnter | Gang 1,31 |
| — sechzehnter/siebzehnter | Gang 1,35 |
| — siebzehnter/achtzehnter | Gang 1,405 |

Ein Fahrzeug mit einem solchen Getriebe kann beispielsweise folgende Fahrgeschwindigkeiten erreichen:

| — im ersten | Gang 0,89 km/h |
| — im zweiten | Gang 1,15 km/h |
| — im dritten | Gang 1,49 km/h |
| — im vierten | Gang 1,95 km/h |
| — im fünften | Gang 2,62 km/h |
| — im sechsten | Gang 3,68 km/h |
| — im siebten | Gang 4,51 km/h |
| — im achten | Gang 5,45 km/h |
| — im neunten | Gang 6,53 km/h |
| — im zehnten | Gang 7,76 km/h |
| — im elften | Gang 9,20 km/h |
| — im zwölften | Gang 10,88 km/h |
| — im dreizehnten | Gang 12,77 km/h |
| — im vierzehnten | Gang 16,45 km/h |
| — im fünfzehnten | Gang 21,25 km/h |
| — im sechzehnten | Gang 27,90 km/h |
| — im siebzehnten | Gang 37,60 km/h |
| — im achtzehnten | Gang 52,80 km/h |

*Bezugszeichen*

| 1 | Hauptachse |
| 2 | Antriebswelle |
| 3 | Motor-Zapfwelle, Zapfwelle |
| 4 | Doppelkupplung, Kupplung |
| 5 | Reibkupplung, Kupplung |
| 6 | Reibkupplung, Kupplung |
| 7 | Zwischenwelle, Hohlwelle |
| 8 | Hauptgetriebe, Teil |
| 9 | Hauptgetriebe, Teil |
| 10 | Zwischenwelle, Hohlwelle |
| 11 | Zwischenwelle, Hohlwelle |
| 12 | Bereichsgruppengetriebe |
| 13 | Wendegetriebe |
| 14 | Nebenachse |
| 15 | Nebenwelle |
| 16 | Nebenachse |
| 17 | Nebenwelle, Hohlwelle |
| 18 | Abtriebswelle |
| 19 | Zahnrad, Festrad |
| 20 | Zahnrad, Festrad |
| 21 | Zahnrad, Festrad |
| 22 | Zahnrad, Festrad |
| 23 | Zahnrad, Festrad |
| 24 | Zahnrad, Festrad |
| 25 | Zahnrad, Festrad |
| 26 | Zahnrad, Festrad |
| 27 | Zahnrad, Festrad |
| 28 | Zahnrad, Festrad |
| 29 | Zahnrad, Festrad |
| 30 | Zahnrad, Losrad |
| 31 | Zahnrad, Losrad |
| 32 | Zahnrad, Losrad |
| 33 | Zahnrad, Losrad |
| 34 | Zahnrad, Losrad |
| 35 | Zahnrad, Losrad |
| 36 | Doppel-Klauenkupplung, Klauenkupplung, Kupplung |

| | | |
|---|---|---|
| 37 | Doppel-Klauenkupplung, Klauenkupplung, Kupplung | |
| 38 | Doppel-Klauenkupplung, Klauenkupplung, Kupplung | |
| 39 | Zahnrad, Losrad | |
| 40 | Zahnrad, Losrad | |
| 41 | Zahnrad, Losrad | |
| 42 | Zahnrad, Losrad | |
| 43 | Zahnrad, Festrad | |
| 44 | Doppel-Klauenkupplung, Klauenkupplung, Kupplung | |
| 45 | Doppel-Klauenkupplung, Klauenkupplung, Kupplung | |
| 46 | Zahnrad, Losrad | |
| 47 | Kegelritzel | |
| 48 | Doppel-Klauenkupplung, Klauenkupplung, Kupplung | |
| 49 | Nebenachse | |
| 50 | Umkehr-Zahnrad | |
| 51 | Weg-Zapfwelle, Zapfwelle | |
| 52 | Zahnrad, Festrad | |
| 53 | Zahnrad, Festrad | |
| 54 | Zahnrad, Losrad | |
| 55 | Zahnrad, Losrad | |
| 56 | Doppel-Klauenkupplung, Klauenkupplung, Kupplung | |
| 57 | Zahnrad, Losrad | |
| 58 | Zahnrad, Losrad | |
| 59 | Doppel-Klauenkupplung, Klauenkupplung, Kupplung | |
| 60 | Klauenkupplung, Kupplung | |
| 61 | Klauenkupplung, Kupplung | |

*Bezugszeichen*

| | | |
|---|---|---|
| 1 | Hauptachse | main axis |
| 2 | Antriebswelle | input shaft |
| 3 | Motor-Zapfwelle, Zapfwelle | engine driven take-off shaft |
| 4 | Doppel-Reibkupplung, Kupplung | pair of friction clutches |
| 5 | Reibkupplung, Kupplung | friction clutch |
| 6 | Reibkupplung, Kupplung | friction clutch |
| 7 | Zwischenwelle, Hohlwelle | hollow intermediate shaft |
| 8 | Hauptgetriebe, Teil | part of main gear set |
| 9 | Hauptgetriebe, Teil | part of main gear set |
| 10 | Zwischenwelle, Hohlwelle | hollow intermediate shaft |
| 11 | Zwischenwelle, Hohlwelle | hollow intermediate shaft |
| 12 | Bereichsgruppengetriebe | range change gear set |
| 13 | Wendegetriebe | reversing gear set |
| 14 | Nebenachse | counter axis |
| 15 | Nebenwelle | counter shaft |
| 16 | Nebenachse | counter axis |
| 17 | Nebenwelle, Hohlwelle | hollow counter shaft |
| 18 | Antriebswelle | output shaft |
| 19 | Zahnrad, Festrad | fixed gear |
| 20 | Zahnrad, Festrad | fixed gear |
| 21 | Zahnrad, Festrad | fixed gear |
| 22 | Zahnrad, Festrad | fixed gear |
| 23 | Zahnrad, Festrad | fixed gear |
| 24 | Zahnrad, Festrad | fixed gear |
| 25 | Zahnrad, Festrad | fixed gear |
| 26 | Zahnrad, Festrad | fixed gear |
| 27 | Zahnrad, Festrad | fixed gear |
| 28 | Zahnrad, Festrad | fixed gear |
| 29 | Zahnrad, Festrad | fixed gear |
| 30 | Zahnrad, Losrad | idler gear |
| 31 | Zahnrad, Losrad | idler gear |
| 32 | Zahnrad, Losrad | idler gear |
| 33 | Zahnrad, Losrad | idler gear |
| 34 | Zahnrad, Losrad | idler gear |
| 35 | Zahnrad, Losrad | idler dear |
| 36 | synchronisierte Klauenkupplung, Kupplung | pair of synchronized dog clutches |
| 37 | Doppel-Klauenkupplung, Kupplung | pair of synchronized dog clutches |
| 38 | Doppel-Klauenkupplung, Kupplung | pair of synchronized god clutches |
| 39 | Zahnrad, Losrad | idler gear |
| 40 | Zahnrad, Losrad | idler gear |
| 41 | Zahnrad, Losrad | idler gear |
| 42 | Zahnrad, Losrad | idler gear |
| 43 | Zahnrad, Festrad | fixed gear |
| 44 | Doppel-Klauenkupplung, Kupplung | pair of synchronized dog clutches |
| 45 | Doppel-Klauenkupplung, Kupplung | pair of synchronized dog clutches |

| 46 | Zahnrad, Losrad | idler gear |
|---|---|---|
| 47 | Kegelritzel | bevel pinion |
| 48 | Doppel-Klauenkupplung, Kupplung | pair of synchronized dog clutches |
| 49 | Nebenachse | counter axis |
| 50 | Umkehr-Zahnrad | reversing gear |
| 51 | Weg-Zapfwelle, Zapfwelle | ground driven take-off shaft |
| 52 | Zahnrad, Festrad | fixed gear |
| 53 | Zahnrad, Festrad | fixed gear |
| 54 | Zahnrad, Losrad | idler gear |
| 55 | Zahnrad, Losrad | idler gear |
| 56 | Doppel-Klauenkupplung, Kupplung | pair of synchronized dog clutches |
| 57 | Zahnrad, Losrad | idler gear |
| 58 | Zahnrad, Losrad | idler gear |
| 59 | Doppel-Klauenkupplung, Kupplung | pair of synchronized dog clutches |
| 60 | Klauenkupplung, Kupplung | synchronized claw clutch |
| 61 | Klauenkupplung, Kupplung | synchronized claw clutch |

**Patentansprüche**

1. Lastschaltbares Getriebe für Kraftfahrzeuge, besonders Ackerschlepper, mit den Merkmalen:

— ein Hauptgetriebe (8, 9) mit mindestens vier Gangstufen, ein Bereichsgruppengetriebe (12) und ein Wendegetriebe (13) sind in Leistungsflussrichtung hintereinander angeordnet,

— das Wendegetriebe (13) kann zu jeder Vorwärts-Gangstufe eine Rückwärts-Gangstufe bilden,

— das Getriebe hat Radsätze aus ständig miteinander kämmenden Zahnrädern (19 bis 35, 39 bis 43, 46, 47, 50),

— das Getriebe hat synchonisierte Klauenkupplungen (36, 37, 38, 44, 45, 48),

— das Getriebe hat eine erste und eine zweite lastschaltbare Reibkupplung (5, 6),

— das Getriebe überträgt Leistung von einer Antriebswelle (2) auf eine Abtriebswelle (18) in jeder Gangstufe über mindestens einen Radsatz, mindestens zwei Klauenkupplungen und eine der zwei Reibkupplungen (5 oder 6),

— das Getriebe bildet einen ersten und einen zweiten Leistungszweig,

— in dem ersten Leistungszweig sind angeordnet die erste Reibkupplung (5) und alle Radsätze und Klauenkupplungen aller ungeradzahligen Gangstufen,

— in dem zweiten Leistungszweig sind angeordnet die zweite Reibkupplung (6) und alle Radsätze und Klauenkupplungen aller geradzahligen Gangstufen,

— bei einem Gangwechsel von einer ungeradzahligen Gangstufe in eine geradzahlige Gangstufe bleiben die Reibkupplung (5) und alle Klauenkupplungen dieser ungeradzahligen Gangstufe geschlossen, bis auch alle Klauenkupplungen dieser geradzahligen Gangstufe geschlossen sind, dann erst öffnet die Reibkupplung (5) der ungeradzahligen Gangstufe und schliesst die Reibkupplung (6) der geradzahligen Gangstufe,

— bei einem Gangwechsel von einer geradzahligen Gangstufe in eine ungeradzahlige Gangstufe bleiben die Reibkupplung (6) und alle Klauenkupplungen dieser geradzahligen Gangstufe geschlossen, bis auch alle Klauenkupplungen dieser ungeradzahligen Gangstufe geschlossen sind, dann erst öffnet die Reibkupplung (6) der geradzahligen Gangstufe und schliesst die Reibkupplung (5) der ungeradzahligen Gangstufe,

— jeder Gangwechsel zwischen unmittelbar benachbarten Gangstufen ist unter voller Last schaltbar,

— das Getriebe kann auch während eines solchen Gangwechsels ununterbrochen Leistung übertragen,

— die Reibkupplungen (5, 6), die Doppel-Klauenkupplungen (36, 37, 38, 44, 45, 48) und die Zahnräder (19 bis 35, 39 bis 43, 46, 47, 50) sind im wesentlichen in einer Hauptachse (1) und in einer ersten und einer zweiten Nebenachse (14, 16) angeordnet, gekennzeichnet durch die Merkmale:

— in der Hauptachse (1) angeordnet sind die Antriebswelle (2) des Getriebes, die erste und die zweite Reibkupplung (5, 6) und eine erste, eine zweite und eine dritte Zwischenwelle (7, 10, 11),

— die erste Reibkupplung (5) verbindet die Antriebswelle (2) des Getriebes mit der ersten Zwischenwelle (7),

— die erste Zwischenwelle (7) trägt Festräder (19 bis 22),

— die Festräder (19 bis 22) bilden treibende Zahnräder in dem ersten Leistungszweig für einen ersten und einen zweiten Teil des Hauptgetriebes (8, 9),

— die zweite Reibkupplung (6) verbindet die Antriebswelle (2) des Getriebes mit der zweiten Zwischenwelle (10),

— die zweite Zwischenwelle (10) trägt Festräder (23 bis 26),

— die Festräder (23 bis 26) bilden treibende Zahnräder in dem zweiten Leistungszweig für den ersten und den zweiten Teil des Hauptgetriebes (8, 9),

— die dritte Zwischenwelle (11) bildet eine gemeinsame Welle des Bereichsgruppengetriebes (12) und des Wendegetriebes (13) und trägt Festräder (27, 28, 29) als Zahnräder für das Bereichsgruppengetriebe (12) und das Wendegetriebe (13),

— in der ersten Nebenachse (14) angeordnet ist eine erste Nebenwelle (15) mit Doppel-Klauenkupplungen (36, 37) und Losrädern (30 bis 33) als getriebenen Zahnrädern für den ersten Teil (8) des Hauptgetriebes (8, 9) und mit einer Doppel-Klauenkupplung (38) und Losrädern (34, 35) als treibenden Zahnrädern für das Bereichsgruppengetriebe (12),

— die erste Nebenwelle (15) bildet eine Abtriebswelle für den ersten Teil (8) des Hauptgetriebes (8, 9) und eine Antriebswelle für das Bereichsgruppengetriebe (12),

— der erste Teil (8) des Hauptgetriebes (8, 9) bildet eine Reihe von Gangstufen mit grossem Stufensprung,

— das Bereichsgruppengetriebe (12) bildet eine langsame und eine schnelle Bereichsstufe,

— in der zweiten Nebenachse (16) angeordnet sind eine zweite Nebenwelle (17) mit Klauenkupplungen (44, 45) und Losrädern (39 bis 42) als getriebenen Zahnrädern für den zweiten Teil (9) des Hauptgetriebes (8, 9) und mit einem Festrad (43) als einem zeitweise getriebenen und zeitweise treibenden Zahnrad des Wendegetriebes (13) und die Abtriebswelle (18) des Getriebes mit einer ersten und einer zweiten Klauenkupplung (60, 61) und einem Losrad (46) als getriebenem Zahnrad des Wendegetriebes (13),

— die zweite Nebenwelle (17) bildet eine Abtriebswelle für den zweiten Teil (9) des Hauptgetriebes (8, 9),

— der zweite Teil (9) des Hauptgetriebes (8, 9) bildet eine Reihe von Gangstufen mit kleinem Stufensprung,

— die Abtriebswelle (18) des Getriebes bildet die Abtriebswelle des Wendegetriebes (13),

— die erste Klauenkupplung (60) des Wendegetriebes (13) verbindet die zweite Nebenwelle (17) unmittelbar mit der Abtriebswelle (18) des Getriebes und bildet damit eine zusätzliche mittlere Bereichsstufe eines Gesamtbereichsgruppengetriebes (12, 60) und eine Vorwärtsstufe des Wendegetriebes (13),

— die zweite Klauenkupplung (61) des Wendegetriebes (13) bildet mit dem Losrad (46) auf der Abtriebswelle (18) des Getriebes und mit einem Losrad als Umkehr-Zahnrad (50) in einer dritten Nebenachse (49) eine Rückwärtsstufe des Wendegetriebes (13).

2. Getriebe nach Anspruch 1, gekennzeichnet durch die Merkmale:

— die zwei Reibkupplungen (5, 6) sind axial zwischen der ersten Zwischenwelle (7) und der zweiten Zwischenwelle (10) angeordnet,

— die zwei Reibkupplungen (5, 6) sind baulich vereinigt zu einer Doppel-Reibkupplung (4).

3. Getriebe nach Anspruch 1, gekennzeichnet durch die Merkmale:

— die dritte Zwischenwelle (11) ist axial hinter der ersten und zweiten Zwischenwelle (7, 10) in der Hauptachse (1) angeordnet,

— die drei Zwischenwellen (7, 10, 11) sind Hohlwellen,

— die Antriebswelle (2) geht durch die drei hohlen Zwischenwellen (7, 10, 11) hindurch und bildet eine abtriebsseitige Motor-Zapfwelle (3).

4. Getriebe nach Anspruch 1, gekennzeichnet durch die Merkmale:

— die zweite Nebenwelle (17) ist eine Hohlwelle,

— die Abtriebswelle (18) geht durch die hohle zweite Nebenwelle (17) hindurch und bildet eine antriebsseitige Weg-Zapfwelle (51).

5. Getriebe nach Anspruch 1, gekennzeichnet durch das Merkmal:

mindestens ein Festrad (19) auf einer Zwischenwelle (7) des Hauptgetriebes (8, 9) in der Hauptachse (1) kämmt sowohl mit einem Losrad (30) auf der ersten Nebenwelle (15) in der ersten Nebenachse (14) als auch mit einem Losrad (39) auf der zweiten Nebenwelle (17) in der zweiten Nebenachse (16).

6. Getriebe nach Anspruch 1, gekennzeichnet durch die Merkmale:

— die Zähnezahlen der treibenden/getriebenen Zahnräder betragen:

— im ersten Teil (8) des Hauptgetriebes (8, 9) in der Hauptachse (1)/ersten Nebenachse (14): 35/40, 48/26, 41/32, 51/22,

— im zweiten Teil (9) des Hauptgetriebes (8, 9) in der Hauptachse (1)/zweiten Nebenachse (16): 20/54, 26/49, 23/52, 29/45,

— im Bereichsgruppengetriebe (12) in der ersten Nebenachse (14)/Hauptachse (1): 25/50, 59/16,

— im Wendegetriebe (13) in der Hauptachse (1)/zweiten Nebenachse (16): 16/59, 16/51.

7. Getriebe nach Anspruch 1, gekennzeichnet durch die Merkmale:

— die Zähnezahlen der treibenden/getriebenen Zahnräder betragen:

— im ersten Teil (8) des Hauptgetriebes (8, 9) in der Hauptachse (1)/ersten Nebenachse (14): 30/31, 40/21, 35/26, 45/16,

— im zweiten Teil (9) des Hauptgetriebes (8, 9) in der Hauptachse (1)/zweiten Nebenachse (16): 30/73, 40/63, 35/68, 45/58,

— im Bereichsgruppengetriebe (12) in der ersten Nebenachse (14)/Hauptachse (1): 15/46, 45/16,

— im Wendegetriebe (13) in der Hauptachse (1)/zweiten Nebenachse (16): 27/76, 16/45.

8. Getriebe nach Anspruch 1, gekennzeichnet durch die Merkmale:

— die Zähnezahlen der treibenden/getriebenen Zahnräder betragen:

— im ersten Teil (8) des Hauptgetriebes (8, 9) in der Hauptachse (1)/ersten Nebenachse (14): 37/42, 47/32, 57/22, 42/37, 52/27, 62/17,

— im zweiten Teil (9) des Hauptgetriebes (8, 9) in der Hauptachse (1)/zweiten Nebenachse (16): 37/82, 47/72, 57/62, 42/77, 52/67, 62/57,

— im Bereichsgruppengetriebe (12) in der ersten Nebenachse (14)/Hauptachse (1): 17/62, 63/16,

— im Wendegetriebe (13) in der Hauptachse

(1)/zweiten Nebenachse (16): 32/87, 16/43.

9. Getriebe nach Anspruch 1, gekennzeichnet durch die Merkmale:

— die zwei Reibkupplungen (5, 6) und alle Doppel-Klauenkupplungen (36, 37, 38, 44, 45, 48, 56, 59) schalten mit Hilfskraft,

— eine Schaltlogik steuert die Hilfskraft bei jedem Schaltvorgang.

## Claims

1. Load switchable transmission for vehicles, in particular tractors, having the features:

— a main gear set (8, 9) having at least four gear steps, a range change gear set (12) and a reversing gear set (13) are arranged in series in power flow direction,

— the reversing gear set (13) can form a reverse gear step for every forward gear step,

— the transmission has wheel sets of gears (19 to 35, 39 to 43, 46, 47, 50) continually meshing with one another,

— the transmission has synchronised dog clutches (36, 37, 38, 44, 45, 48),

— the transmission has a first and a second load switchable friction clutch (5, 6),

— the transmission transmits power from an input shaft (2) to an output shaft (18) in every gear step via at least one wheel set, at least two dog clutches and one of the two friction clutches (5 or 6),

— the transmission forms a first and second power transmission branch,

— in the first power transmission branch are arranged the first friction clutch (5) and all wheel sets and dog clutches of all odd-numbered gear steps,

— in the second power transmission branch are arranged the second friction clutch (6) and all wheel sets and dog clutches of all even-numbered gear steps,

— during a gear change from an odd-numbered gear step to an even-numbered gear step the friction clutch (5) and all dog clutches of this odd-numbered gear step remain closed, until also all dog clutches of this even-numbered gear step are closed, only then the friction clutch (5) of the odd-numbered gear step opens and closes the friction clutch (6) of the even-numbered gear step,

— during a gear change from an even-numbered gear step to an odd-numbered gear step the friction clutch (6) and all dog clutches of this even-numbered gear step remain closed, until also all dog clutches of this odd-numbered gear step are closed, only then the friction clutch (6) of the even-numbered gear step opens and closes the friction clutch (5) of the odd-numbered gear step,

— every gear change between directly adjacent gear steps can be switched under full load,

— the transmission can continually transfer power, even during such a gear change,

— the friction clutches (5, 6), the pairs of dog clutches (36, 37, 38, 44, 45, 48) and the gears (19 to 35, 39 to 43, 46, 47, 50) are essentially arranged in a main axis (1) and in a first and second counter axis (14, 16), characterised by the features:

— in the main axis (1) are arranged the input shaft (2) of the transmission, the first and the second friction clutch (5, 6) and a first, a second and a third intermediate shaft (7, 10, 11),

— the first friction clutch (5) connects the input shaft (2) of the transmission with the first intermediate shaft (7),

— the first intermediate shaft carries fixed gears (19 to 22),

— the fixed gears (19 to 22) form driving gears in the first power transmission branch for a first and a second part of the main gear set (8, 9),

— the second friction clutch (6) connects the input shaft (2) of the transmission with the second intermediate shaft (10),

— the second intermediate shaft (10) carries fixed gears (23 to 26),

— the fixed gears (23 to 26) form driving gears in the second power transmission branch for the first and the second part of the main gear set (8, 9),

— the third intermediate shaft (11) forms a common shaft of the range change gear set (12) and of the reversing gear set (13) and carries fixed gears (27, 28, 29) as gears for the range change gear set (12) and the reversing gear set (13),

— in the first counter axis (14) is arranged a first counter shaft (15) having pairs of dog clutches (36, 37) and idler gears (30 to 33) as driven gears for the first part (8) of the main gear set (8, 9) and having a pair of dog clutches (38) and idler gears (34, 35) as driving gears for the range change gear set (12),

— the first counter shaft (15) forms an output shaft for the first part (8) of the main gear set (8, 9) and an input shaft for the range change gear set (12),

— the first part (8) of the main gear set (8, 9) forms a number of gear steps having a large progression,

— the range change gear set (12) forms a slow and a fast range step,

— in the second counter axis (16) are arranged a second counter shaft (17) having dog clutches (44, 45) and idler gears (39 to 42) as driven gears for the second part (9) of the main gear set (8, 9) and having a fixed gear (43), at times driven and at times driving, as gear of the reversing gear set (13), and the output shaft (18) of the transmission having a first and a second dog clutch (60, 61) and an idler gear (46) as the driven gear of the reversing gear set (13),

— the second counter shaft (17) forms an output shaft for the second part (9) of the main gear set (8, 9),

— the second part (9) of the main gear set (8, 9) forms a number of gear steps having a small progression,

— the output shaft (18) of the transmission forms the output shaft of the reversing gear set (13),

— the first dog clutch (60) of the reversing gear set (13) connects the second counter shaft (17) directly with the output shaft (18) of the transmission and forms an additional mean range step of an entire range change gear set (12, 60) therewith and a forward step of the reversing gear set (13),

— the second dog clutch (61) of the reversing gear set (13) forms a reverse step of the reversing gear set (13) with the idler gear (46) on the output shaft (18) of the transmission and with an idler gear as reversing gear (50) in a third counter axis (49).

2. Transmission according to claim 1, characterised by the features:

— the two friction clutches (5, 6) are arranged axially between the first intermediate shaft (7) and the second intermediate shaft (10),

— the two friction clutches (5, 6) are constructionally united to a pair of friction clutches (4).

3. Transmission according to claim 1, characterised by the features:

— the third intermediate shaft (11) is arranged axially behind the first and second intermediate shaft (7, 10) in the main axis (1),

— the three intermediate shafts (7, 10, 11) are hollow shafts,

— the input shaft (2) passes through the three hollow intermediate shafts (7, 10, 11) and forms an engine driven take-off shaft (3).

4. Transmission according to claim 1, characterised by the features:

— the second counter shaft (17) is a hollow shaft,

— the output shaft (18) passes through the hollow counter shaft (17) and forms a ground driven take-off shaft (51).

5. Transmission according to claim 1, characterised by the feature: at least one fixed gear (19) on an intermediate shaft (7) of the main gear set (8, 9) in the main axis (1) meshes with an idler gear (30) on the first counter shaft (15) in the first counter axis (14), as well as with an idler gear (39) on the second counter shaft (17) in the second counter axis (16).

6. Transmission according to claim 1, characterised by the features:

— the number of teeth of the driving/driven gears amount to:

— in the first part (8) of the main gear set (8, 9) in the main axis (1)/first counter axis (14): 35/40, 48/26, 41/32, 51/22,

— in the second part (9) of the main gear set (8, 9) in the main axis (1)/second counter axis (16): 20/54, 26/49, 23/52, 29/45,

— in the range change gear set (12) in the first counter axis (14)/main axis (1): 25/50, 59/16,

— in the reversing gear set (13) in the main axis (1)/second counter axis (16): 16/59, 16/51.

7. Transmission according to claim 1, characterised by the features:

— the number of teeth of the driving/driven gears amount to:

— in the first part (8) of the main gear set (8, 9) in the main axis (1)/first counter axis (14): 30/31, 40/21, 35/26, 45/16,

— in the second part (9) of the main gear set (8, 9) in the main axis (1)/second counter axis (16): 30/73, 40/63, 35/68, 45/58,

— in the range change gear set (12) in the first counter axis (14)/main axis (1): 15/46, 45/16,

— in the reversing gear set (13) in the main axis (1)/second counter axis (16): 27/76, 16/45.

8. Transmission according to claim 1, characterised by the features:

— the numbers of teeth of the driving/driven gears amount to:

— in the first part (8) of the main gear set (8, 9) in the main axis (1)/first counter axis (14): 37/42, 47/32, 57/22, 42/37, 52/27, 62/17,

— in the second part (9) of the main gear set (8, 9) in the main axis (1)/second counter axis (16): 37/82, 47/72, 57/62, 42/77, 52/67, 62/57,

— in the range change gear set (12) in the first counter axis (14)/main axis (1): 17/62, 63/16,

— in the reversing gear set (13) in the main axis (1)/second counter axis (16): 32/87, 16/43.

9. Transmission according to claim 1, characterised by the features:

— the two friction clutches (5, 6) and all pairs of dog clutches (36, 37, 38, 44, 45, 48, 56, 59) change with auxiliary force,

— a logic circuit controls the auxiliary force during every switching operation.


**Revendications**

1. Transmission commutable en charge pour véhicules à moteur, notamment pour tracteurs agricoles, dans laquelle:

— une boîte de vitesses principale (8, 9) à au moins quatre rapports, une boîte à groupe-relais (12) et une boîte d'inversion (13) sont disposées l'une après l'autre dans le sens de transmission de la puissance,

— la boîte d'inversion (13) est agencée pour fournir un rapport de marche arrière pour chaque rapport de marche avant,

— la transmission comporte des engrenages formés de pignons constamment engrenés mutuellement (19 à 35, 39 à 43, 46, 47, 50),

— la transmission comporte des embrayages synchronisés à crabots (36, 37, 38, 44, 45, 48),

— la transmission comporte un premier et un second embrayage à friction (5, 6) qui sont commutables en charge,

— la transmission transmet la puissance d'un arbre d'entrée (2) à un arbre de sortie (18) dans chaque rapport au moyen d'au moins un engrenage, au moins deux embrayages à crabots et au moins l'un des deux embrayages à friction (5 ou 6),

— la transmission forme une première et une seconde voie de transmission de la puissance,

— la première voie de transmission comporte le premier embrayage à friction (5) et tous les engrenages et embrayages à crabots de tous les rapports impairs,

— la deuxième voie de transmission comporte le second embrayage à friction (6) et tous les engrenages et embrayages à crabots de tous les rapports pairs,

— lors d'un changement d'un rapport impair à un rapport pair, l'embrayage à friction (5) et tous les embrayages à crabots dudit rapport impair restent fermés jusqu'à ce que tous les embrayages à crabots dudit rapport pair soient fermés, et c'est seulement ensuite que s'ouvre l'embrayage à friction (5) du rapport impair et que se ferme l'embrayage à friction (6) du rapport pair,

— lors d'un changement d'un rapport pair à un rapport impair, l'embrayage à friction (6) et tous les embrayages à crabots dudit rapport pair restent fermés jusqu'à ce que tous les embrayages à friction dudit rapport impair soient fermés, et c'est seulement ensuite que s'ouvre l'embrayage à friction (6) du rapport pair et que se ferme l'embrayage à friction (5) du rapport impair,

— chaque changement entre des rapports immédiatement voisins peut se faire sous pleine charge,

— la transmission peut transmettre une puissance ininterrompue même pendant un tel changement de rapports,

— les embrayages à friction (5, 6), les embrayages doubles à crabots (36, 37, 38, 44, 45, 48) et les pignons (19 à 35, 39 à 43, 46, 47, 50) sont disposés essentiellement sur un premier axe primaire (1) et sur un premier et un second axe secondaire (14, 16), caractérisée en ce que:

— sur l'axe primaire (1) se trouvent l'arbre d'entrée (2) de la transmission, le premier et le second embrayage à friction (5, 6) et un premier, un deuxième et un troisième arbre intermédiaire (7, 10, 11),

— le premier embrayage à friction (5) relie l'arbre d'entrée (2) de la transmission au premier arbre intermédiaire (7),

— le premier arbre intermédiaire (7) porte des pignons fixes (19 à 22),

— les pignons fixes (19 à 22) constituent des pignons entraîneurs pour une première et une seconde partie de la boîte principale (8, 9) dans la première voie de transmission,

— le second embrayage à friction (6) relie l'arbre d'entrée (2) de la transmission au deuxième arbre intermédiaire (10),

— le deuxième arbre intermédiaire (10) porte des pignons fixes (23 à 26),

— les pignons fixes (23 à 26) constituent des pignons entraîneurs pour la première et la seconde partie de la boîte principale (8, 9), dans la seconde voie de transmission,

— le troisième arbre intermédiaire (11) constitue un arbre commun de la boîte à groupe-relais (12) et de la boîte d'inversion (13) et il porte des pignons fixes (27, 28, 29) servant de pignons pour la boîte à groupe-relais (12) et pour la boîte d'inversion (13),

— sur le premier axe secondaire (14) se trouve un premier arbre secondaire (15) pourvu d'embrayages doubles à crabots (36, 37) et de pignons fous (30 à 33), servant de pignons entraînés dans la première partie (8) de la boîte principale (8, 9), et d'un embrayage double à crabots (38) et de pignons fous (34, 35) servant de pignons entraînés dans la boîte à groupe-relais (12),

— le premier arbre secondaire (15) constitue un arbre de sortie de la première partie (8) de la boîte principale (8, 9) et un arbre d'entrée de la boîte à groupe-relais (12),

— la première partie (8) de la boîte principale (8, 9) comporte une gamme de rapports à étagement large,

— la boîte à groupe-relais (12) comporte un étage lent et un étage rapide,

— sur le second axe secondaire (16) se trouvent un second arbre secondaire (17) pourvu d'embrayages à crabots (44, 45) et de pignons fous (39 à 42), servant de pignons entraînés dans la seconde partie (9) de la boîte principale (8, 9), et d'un pignon fixe (43) servant de pignon tantôt entraîné et tantôt entraîneur dans la boîte d'inversion (13), ainsi que l'arbre de sortie (18) de la transmission, pourvu d'un premier et d'un second embrayage à crabots (60, 61) et d'un pignon fou (46) servant de pignon entraîné de la boîte d'inversion (13),

— le second arbre secondaire (17) constitue un arbre de sortie de la seconde partie (9) de la boîte principale (8, 9),

— la seconde partie (9) de la boîte principale (8, 9) comporte une gamme de rapports à étagement serré,

— l'arbre de sortie (18) de la transmission constitue l'arbre de sortie de la boîte d'inversion (13),

— le premier embrayage à crabots (60) de la boîte d'inversion (13) relie le second arbre secondaire (17) directement à l'arbre de sortie (18) de la transmission et forme ainsi un étage supplémentaire moyen d'une boîte d'ensemble à groupe-relais (12, 60) et un étage de marche avant de la boîte d'inversion (13),

— le second embrayage à crabots (61) de la boîte d'inversion (13) forme un étage de marche arrière de la boîte d'inversion (13), avec le pignon fou (46) monté sur l'arbre de sortie (18) de la transmission et avec un pignon fou monté comme pignon d'inversion (50) sur un troisième arbre secondaire (49).

2. Transmission selon la revendication 1, caractérisée en ce que:

— les deux embrayages à friction (5, 6) sont disposés axialement entre le premier arbre intermédiaire (7) et le deuxième arbre intermédiaire (10),

— les deux embrayages à friction (5, 6) sont réunis en un embrayage double à friction (4).

3. Transmission selon la revendication 1, caractérisée en ce que:

— le troisième arbre intermédiaire (11) est disposé axialement après le premier et le deuxième arbre intermédiaire (7, 10) sur l'axe principal (1),

— les trois arbres intermédiaires (7, 10, 11) sont des arbres creux,

— l'arbre d'entrée (2) s'étend à travers les trois arbres intermédiaires creux (7, 10, 11) et comporte

en sortie une prise de mouvement (3) dépendant du moteur.

4. Transmission selon la revendication 1, caractérisée en ce que:

— le second arbre secondaire (17) est un arbre creux,

— l'arbre de sortie (18) s'étend à travers le second arbre secondaire creux (17) et comporte, du côté de l'entrée, une prise de mouvement (51) dépendant du chemin parcouru.

5. Transmission selon la revendication 1, caractérisée en ce que: au moins un pignon fixe (19) sur un arbre intermédiaire (7) disposé sur l'axe principal (1) dans la boîte principale (8, 9) est engrené à la fois avec un pignon fou (30) monté sur le premier arbre secondaire (15) sur le premier axe secondaire (14) et avec un pignon fou (39) monté sur le second arbre secondaire (17) sur le second axe secondaire (16).

6. Transmission selon la revendication 1, caractérisée en ce que:

— les nombres de dents des pignons entraîneurs/entraînés sont les suivants:

— dans la première partie (8) de la boîte principale (8, 9), sur l'axe principal (1)/le premier axe secondaire (14): 35/40, 48/26, 41/32, 51/22,

— dans la seconde partie (9) de la boîte principale (8, 9), sur l'axe principal (1)/le second axe secondaire (16): 20/54, 26/49, 23/52, 29/45,

— dans la boîte à groupe-relais (12), sur le premier axe secondaire (14)/l'axe principal (1): 25/50, 59/16,

— dans la boîte d'inversion (13), sur l'axe principal (1)/le second axe secondaire (16): 16/59, 16/51.

7. Transmission selon la revendication 1, caractérisée en ce que:

— les nombres de dents des pignons entraîneurs/entraînés sont les suivants:

— dans la première partie (8) de la boîte principale (8, 9), sur l'axe principal (1)/le premier axe secondaire (14): 30/31, 40/21, 35/26, 45/16,

— dans la seconde partie (9) de la boîte principale (8, 9), sur l'axe principal (1)/le second axe secondaire (16): 30/73, 40/63, 35/68, 45/58,

— dans la boîte à groupe-relais (12), sur le premier axe secondaire (14)/l'axe principal (1): 15/46, 45/16,

— dans la boîte d'inversion (13), sur l'axe principal (1)/le second axe secondaire (16): 27/76, 16/45.

8. Transmission selon la revendication 1, caractérisée en ce que:

— les nombres de dents des pignons entraîneurs/entraînés sont les suivants:

— dans la première partie (8) de la boîte principale (8, 9), sur l'axe principal (1)/le premier axe secondaire (14): 37/42, 47/32, 57/22, 42/37, 52/27, 62/17,

— dans la seconde partie (9) de la boîte principale (8, 9), sur l'axe principal (1)/le second axe secondaire (16): 37/82, 47/72, 57/62, 42/77, 52/67, 62/57,

— dans la boîte à groupe-relais (12), sur le premier axe secondaire (14)/l'axe principal (1): 17/62, 63/16,

— dans la boîte d'inversion (13), sur l'axe principal (1)/le second axe secondaire (16): 32/87, 16/43.

9. Transmission selon la revendication 1, caractérisée en ce que:

— les deux embrayages à friction (5, 6) et tous les embrayages doubles à crabots (36, 37, 38, 44, 45, 48, 56, 59) sont commutés à l'aide d'une assistance,

— une logique de commutation commande l'assistance à chaque opération de commutation.

FIG.1

FIG.2

FIG. 3